# EUROPÄISCHE PATENTSCHRIFT

(11) **EP 3 491 301 B1**
(45) Veröffentlichungstag und Bekanntmachung des Hinweises auf die Patenterteilung: **08.04.2020**
(21) Anmeldenummer: 18727756.1
(22) Anmeldetag: 23.05.2018
(51) Int. Cl.: F24H 1/18, F24D 15/02, F25B 21/02, H01L 35/30

(54) **VORRICHTUNG ZUR SPEICHERUNG VON TEMPERIERBAREN FLUIDEN**
DEVICE FOR STORING TEMPERATURE-CONTROLLED FLUIDS
DISPOSITIF DE STOCKAGE DE FLUIDES RÉGULABLES EN TEMPERATURE

(30) Priorität: 24.05.2017 DE 102017111492
(43) Veröffentlichungstag der Anmeldung: 05.06.2019
(73) Patentinhaber: Nexol Photovolthermic AG, 88250 Weingarten (DE)
(72) Erfinder: ADELMANN, Peter, 88250 Weingarten (DE)
(74) Vertreter: Wiese, Gerhard
(86) Internationale Anmeldenummer: PCT/EP2018/063446
(87) Internationale Veröffentlichungsnummer: WO 2018/215510

(56) Entgegenhaltungen:
- EP-A2- 2 811 233
- WO-A2-2011/051379
- DE-U1-202009 015 549
- DE-U1-202014 101 899

## Beschreibung

Die Erfindung betrifft eine Vorrichtung zur verlustarmen Speicherung von temperierbaren Fluiden, gemäß dem Oberbegriff des Patentanspruchs 1.

Eine Vorrichtung zur Speicherung von temperierbaren Fluiden ist aus dem Deutschen Gebrauchsmuster DE 20 2009 015 549 U1 bekannt. Dabei handelt es sich um eine Vorrichtung zur Erwärmung von Wasser mit Hilfe von Solarzellen. Die Vorrichtung umfasst einen photovoltaischen Solargenerator, an den ein mit einem Fluidbehälter verbundenes Peltierelement, beispielsweise mittels eines DC/DC-Wandlers, angeschlossen ist.

Eine weitere Vorrichtung ist aus der WO 2011051379 A2 bekannt. Bei dieser ist ein Peltierelement zum Beheizen eines Warmwasserspeichers mit seiner Kaltseite in einem zwischen einer Wand eines Gebäudes und dem Gehäuse des Warmwasserspeichers gebildeten Kanal angeordnet, der unterstützt von einem Gebläse von Umgebungsluft in aufsteigender Richtung durchströmbar ist. Dokument WO 2011051379 A2 offenbart eine Vorrichtung gemäß dem Oberbegriff des Patentanspruchs 1.

Aufgabe der Erfindung ist es, eine Vorrichtung zur hocheffizienten Erzeugung und zur verlustarmen Speicherung von temperierbaren Fluiden, wie beispielsweise Wasser, zu schaffen.

Diese Aufgabe wird durch eine Vorrichtung mit den Merkmalen des Anspruchs 1 gelöst. Vorteilhafte Ausgestaltungen der Erfindung sind in den darauf bezogenen Unteransprüchen angegeben.

Mit der vorliegenden Erfindung ist eine hocheffiziente Erzeugung und ein verlustarmes Speichern von temperierbaren Fluiden, wie beispielsweise Wasser, abhängig von unterschiedlichen Anforderungsprofilen, möglich. Insbesondere lassen sich mittels der erfindungsgemäßen Vorrichtung solche Phasen ohne wesentliche Abkühlung des Fluids überbrücken, in denen der photovoltaische Solargenerator mangels Sonneneinstrahlung keine Energie erzeugt. Die erfindungsgemäße Vorrichtung ermöglicht einen außerordentlich hohen Wirkungsgrad, bei dem die eingesetzte elektrische Leistung durch die zusätzliche Nutzung von kostenfrei zur Verfügung stehender Wärme in ein Vielfaches an Wärme umgewandelt wird. Mittels der Erfindung lässt sich ein COP ("Coefficient of performance") von durchschnittlich 2,2 erreichen, wobei bei kaltem Fluid im Behälter und einer geringen elektrischen Leistung sogar Spitzenwerte eines COP von 5 bis 6 erreicht werden und dieser selbst unter ungünstigsten Bedingungen nicht unter 1,5 fällt. Die Erfindung ermöglicht somit eine sehr effiziente Umsetzung einer zugeführten elektrischen Leistung in ein Vielfaches an Wärmeenergie des zu erwärmenden Fluids.

Als Einsatzgebiet der Erfindung seien beispielhaft energetisch autarke Wohnstätten ohne Anschluss an geregelte überörtliche Energieversorgungsnetze genannt.

Die erfindungsgemäße Vorrichtung zur Speicherung von temperierbaren Fluiden umfasst wenigstens einen Behälter und ein Peltierelement. Die Heißseite des Peltierelements steht in Kontakt mit wenigstens einer Wand des Behälters. Zudem ist wenigstens eine Vorrichtung zum Fördern von warmer Umgebungsluft und/oder eines erwärmten Fluids zur Kaltseite des Peltierelements und wenigsten eine elektrische Energiequelle zur Versorgung des Peltierelements und der Vorrichtung zum Fördern von Umgebungsluft und/oder eines erwärmten Fluids vorgesehen. Das beispielsweise mittels einer Pumpe zur Kaltseite des Peltierelements geförderte Fluid kann beispielsweise als rückgewonnene Wärme aus einem Abwärme-Wärmetauscher, aus einer geothermischen Anlage oder aus einer thermischen Solaranlage stammen, und somit ebenso wie die Umgebungsluft unter einem erheblich geringeren Einsatz von Energie gefördert werden als die in dem Fluid enthaltene Wärmeenergiemenge.

Die Vorrichtung zum Fördern von Umgebungsluft und/oder eines erwärmten Fluids ist zur verlustarmen Speicherung des Fluids im Behälter in Abhängigkeit von der Temperatur der Umgebungsluft betreibbar. Dadurch wird vermieden, dass die Vorrichtung zum Fördern von Umgebungsluft zur Kaltseite des Peltierelements zu solchen Zeiten betrieben wird, in denen im photovoltaischen Solargenerator keine Energie zum Beaufschlagen des Peltierelements erzeugt werden kann, beispielsweise nachts. Damit wird ein Anblasen des Peltierelements mit Kaltluft vermieden, weil das in diesen Phasen durch eine unvermeidbare Wärmeleitung von der Kaltseite zur Warmseite des Peltierelements zu einem unerwünschten Abkühlen der Fluidtemperatur im Behälter führen würde.

Die Heizleistung des Peltierelements ist in Abhängigkeit von der aktuell erzeugten Energie der elektrischen Energiequellen steuerbar, welche insbesondere als photovoltaischer Solargenerator ausgebildet ist. Zudem sind auch der Zeitpunkt und die Zeitdauer und/oder die vom Peltierelement an das Fluid abgegebene Wärmeenergie steuerbar. Dies geschieht anhand eines in einem Steuergerät gespeicherten wenigstens einen Anforderungsprofils zur Bereitstellung des temperierbaren Fluids. Als Referenzzeiten können beispielsweise Sonnenaufgang und Sonnenuntergang herangezogen werden, aber auch persönliche Gewohnheiten der Nutzer der Vorrichtung. So kann beispielsweise in einem Anforderungsprofil bestimmt werden, zu welcher Tageszeit welche Menge an warmem Wasser in welchem Temperaturbereich zur Verfügung stehen soll. Beispielsweise sollen jeden Morgen um 7:00 h 500 Liter warmes Wasser mit einer Temperatur von 40° C im Behälter zur Verfügung stehen.

In einer vorteilhaften Weiterbildung der erfindungsgemäßen Vorrichtung wird eine weitere Energiequelle von einem Akkumulator gebildet. Der Akkumulator ist dabei bevorzugt mittels des photovoltaischen Solargenerators aufladbar. Der Akkumulator puffert und glättet auch die vom photovoltaischen Solargenerator erzeugte Energie und versorgt das Peltierelement unabhängig von der aktuell erzeugten elektrischen Leistung des photovoltaischen Solargenerators mit der entsprechend des jeweiligen Anforderungsprofils erforderlichen elektrischen Energie. Mit Hilfe des wenigstens einen Anforderungsprofils ist beispielsweise auch ein Zeitraster für die Zu- und Abschaltung des Akkumulators für eine Beaufschlagung des Peltierelements generierbar.

In einer vorteilhaften Ausgestaltung ist dem photovoltaischen Solargenerator zur Anpassung der vom Solargenerator erzeugten Spannung an die vom Peltierelement oder von der Vorrichtung zum Fördern von Umgebungsluft benötigte Nutzspannung ein DC/DC-Wandler nachgeschaltet. Der photovoltaische Solargenerator ist dabei mittels des, entweder auf konstante Solargenerator-Spannung oder auf maximale Solargenerator-Leistung, geregelten DC/DC-Wandlers auf das Peltierelement anpassbar.

Ein eintretender Wärmeverlust des Fluids im Behälter ist durch ein Versorgen des Peltierelements mit einer geringen elektrischen Energiemenge kompensierbar. Dies ist insbesondere dann erforderlich, wenn die erforderliche warme Luft- und/ oder Sonneneinstrahlung nicht möglich ist - beispielsweise während der Nachtzeit. Durch eine Versorgung des Peltierelements mit einer geringen elektrischen Leistung von beispielsweise 1 W lassen sich die andernfalls durch eine Wärmeleitung durch das Peltierelement auftretenden Wärmeverluste des Fluids im Behälter in einer Größenordnung von etwa 5 bis 6 W wirkungsvoll und effizient abblocken.

Erfindungsgemäß ist die Kaltseite des Peltierelements in einem vertikal angeordneten Kanal der Vorrichtung zum Fördern der Umgebungsluft angeordnet oder bildet einen Teil einer Wand dieses Kanals. Dieser Kanal weist wenigstens einen aufsteigenden und einen absteigenden Teil auf sowie einen Übergang vom aufsteigenden zum absteigenden Teil, der nach oben hin abgeschlossen ist. An einem Einlass- bzw. Auslassende weist der Kanal besonders bevorzugt ein Gitter und/oder mehrere Rohre, auf. Durch die Luftführung mit einer Zufuhr von unten im aufsteigenden Teil und einer Abfuhr nach unten im absteigenden Teil kann der Wärmeverlust in der Vorrichtung verringert werden. Steht das insbesondere im aufsteigenden Teil des Kanals angeordnete Gebläse still, erwärmt sich die kalte Seite des Peltierelements durch seine Wärmeleitung auf die Temperatur des Fluids im Behälter. Die Luft im Kanal erwärmt sich dadurch und verbleibt auf Grund der geringen Dichte, welche für einen Auftrieb ursächlich ist, im Kanal, d.h. es kommt zu einem Stillstand der Luft. Diese wandelt sich somit von einem Wärmeleiter zu einem Isolator. Dadurch sind Wärmeverluste durch Konvektion verhinderbar. Das Gitter und/oder die Rohre sind vorzugsweise aus einem schlecht wärmeleitenden Material gebildet und verhindern insbesondere durch eine Anordnung in einem Eingangsbereich des Kanals eine Verwirbelung der Luft im Kanal. Dadurch sind Wärmeverluste durch eine äußere Luftbewegung reduzierbar.

Gemäß einer besonders vorteilhaften Weiterbildung der Vorrichtung und/oder des Kanals weisen diese an wenigsten einer Wand eine wärmeisolierende Schicht aus einem Kunststoff und/oder aus einem natürlichen Material auf. Dadurch kann der zuvor erwähnte mögliche Wärmeverlust zusätzlich verringert werden. Die wärmeisolierende Schicht kann beispielsweise aus Polyurethanschaum, Polystyrolplatten oder Hanfplatten gebildet sein.

In einer weiteren besonders vorteilhaften Ausgestaltung der gesamten Vorrichtung zur Speicherung von temperierbaren Fluiden ist der Behälter in einer räumlich getrennten Position zur wenigstens einen elektrischen Energiequelle anordenbar. Dadurch kann die Vorrichtung auch in räumlich beengten oder schwierigen Verhältnissen zum Einsatz kommen, beispielsweise wenn der Behälter in einer anderen Höhenlage als der Solargenerator platziert werden muss. Im Unterschied zu einem thermischen Solargenerator ist es dabei völlig unkritisch, wenn der Behälter höher als der photovoltaische Solargenerator angeordnet ist, da nur dessen elektrische Energie zum Peltierelement geleitet werden muss und kein warmes Wasser unter Einsatz zusätzlicher elektrische Energie zum Behälter gepumpt werden muss.

Für eine einfache Bedienung der Vorrichtung ist in einer Weiterbildung der Erfindung das wenigstens eine Anforderungsprofil durch eine Programmierung des Steuergeräts durch einen Benutzer eingebbar. Alternativ ist das wenigstens eine Anforderungsprofil durch Messungen mittels Sensoren erstellbar, die die Entnahmen des Fluids aus dem Behälter nach der Zeit und der Menge aufzeichnen. Vorteilhafterweise ist das Steuergerät über eine Fernsteuerung ansteuerbar und/oder programmierbar. Die Fernsteuerung kann dabei über eine Mobilfunk-App erfolgen.

Nachfolgend werden Ausführungsbeispiele der erfindungsgemäßen Vorrichtung unter Bezugnahme auf die Zeichnungen näher erläutert. Es zeigen:
- Fig. 1: eine schematische Gesamtdarstellung einer nicht erfindungsgemäß Vorrichtung zum Speichern von temperierbaren Fluiden,
- Fig. 2: eine schematische Darstellung der Funktionsweise der Vorrichtung in einem ersten Ausführungsbeispiel,
- Fig. 3: eine schematische Darstellung der Funktionsweise der Vorrichtung in einem zweiten Ausführungsbeispiel und
- Fig. 4: eine schematische Darstellung der Funktionsweise der Vorrichtung in einem dritten Ausführungsbeispiel.

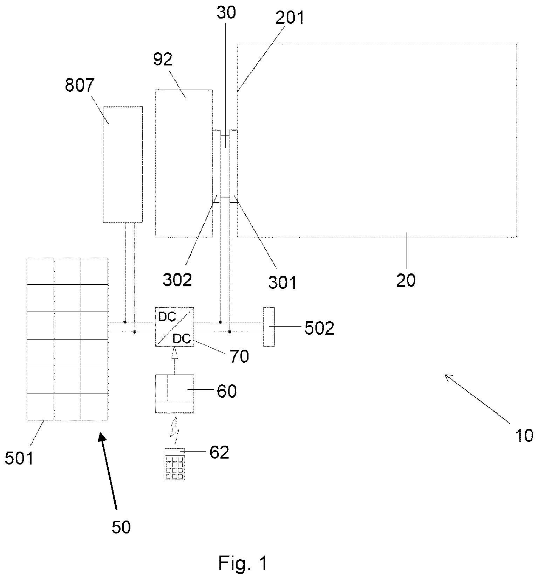

In einer schematischen Darstellung der Vorrichtung 10 in Fig. 1 liegt eine Heißseite 301 eines Peltierelements 30 aufgrund ihrer guten thermischen Leitfähigkeit an einer Wand 201 eines Behälters 20 an, welcher mit einem temperierbaren Fluid, beispielsweise Wasser, gefüllt ist. Eine der Heißseite 301 gegenüberliegende Kaltseite 302 des Peltierelements 30 liegt an einem Kühlkörper 92 an. Alternativ zu einem Anliegen der Heißseite 301 an der Wand 201 des Behälters 20 oder einem Anliegen der Kaltseite 302 an einem Kühlkörper 92 können die Heißseite 301 und/oder die Kaltseite 302 auch einstückig mit der Wand 201 bzw. dem Kühlkörper 92 ausgebildet sein.

Das Peltierelement 30 ist an einen photovoltaischen Solargenerator 501 angeschlossen. Der Anschluss erfolgt in diesem Ausführungsbeispiel über einen DC/DC-Wandler 70. In einer alternativen Ausführungsform kann anstelle des photovoltaischen Solargenerators 501 auch eine andere elektrische Quelle 50 (nicht dargestellt) verwendet werden.

Der auf der Kaltseite 302 des Peltierelements 30 anliegende bzw. einstückig mit dieser ausgebildete Kühlkörper 92 wird durch die Temperatur der Umgebungsluft erwärmt. Um diese Erwärmung zu unterstützen, ist ein Gebläse 807, welches als Ventilator ausgestaltet sein kann, auf der Kaltseite 302 des Peltierelements 30 angeordnet.

Zur Erwärmung der Kaltseite 302 des Peltierelements 30 kann ergänzend oder alternativ zur Förderung von Umgebungsluft auch die Zufuhr eines erwärmten Fluids vorgesehen sein. Dieses beispielsweise mittels einer nicht dargestellten Pumpe zur Kaltseite 302 des Peltierelements 30 geförderte Fluid kann beispielsweise als rückgewonnene Wärme aus einem Abwärme-Wärmetauscher, aus einer geothermischen Anlage oder aus einer thermischen Solaranlage stammen, und somit ebenso wie die Umgebungsluft unter einem erheblich geringeren Einsatz von Energie zur Kaltseite 302 des Peltierelements 30 gefördert werden als dies der in dem Fluid enthaltenen, im System zusätzlich nutzbaren Wärmeenergiemenge entspricht. Der Wirkungsgrad des gesamten Systems aus Behälter 20 und Peltierelement 30 wird durch diese zusätzliche Nutzung kostenfrei zur Verfügung stehender Wärme auf der Kaltseite 302 des Peltierelements 30 wesentlich verbessert.

Um dem photovoltaischen Solargenerator 501 so viel elektrische Energie wie möglich entnehmen zu können, wird der DC/DC-Wandler 70 über ein Steuergerät 60 geregelt. Damit kann der photovoltaische Solargenerator 501 entweder auf konstanter Solargenerator-Spannung oder im Punkt maximaler Solargenerator-Leistung ("MPP-Tracking") gehalten werden. Das Steuergerät 60 ist durch eine Fernsteuerung 62 ansteuer- und/oder programmierbar.

Im Falle, dass die erforderliche warme Luft- und/oder Sonneneinstrahlung nicht verfügbar ist, was beispielsweise üblicher Weise zur Nachtzeit der Fall ist, könnte das Fluid im Behälter 20 über die bestehend aus dem Peltierelement 30 und dem Kühlkörper 92 gebildete Wärmebrücke abkühlen. Um dies zu verhindern, kann das Peltierelement 30 über einen Akkumulator 502 auch in diesen Zeiten mit einer geringen elektrischen Leistung betrieben werden. Mit dieser geringen, dem Peltierelement 30 zugeführten elektrischen Leistung von beispielsweise 1 W wird ein wesentlich größerer thermischer Leistungsverlust von beispielsweise 5 bis 6 W verhindert.

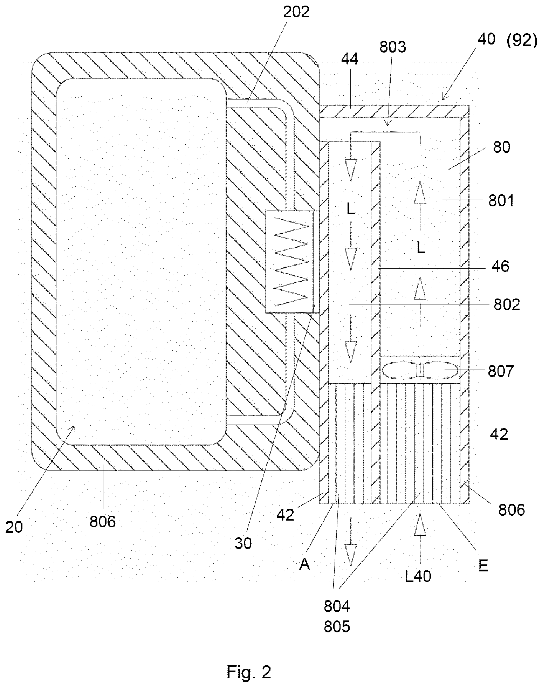

In Fig. 2 ist ein erstes Ausführungsbeispiel der Vorrichtung 10 mit einer einen Kühlkörper 92 aufweisenden oder bildenden Vorrichtung 40 zum Fördern von Umgebungsluft mit einem Kanal 80 dargestellt, der über einen aufsteigenden Teil 801 und einen absteigenden Teil 802 verfügt. Die beiden Teile 801 und 802 des Kanals 80 sind durch einen Übergang 803 miteinander verbunden, der nach oben hin abgeschlossen ist. Dabei weist das röhrenförmige Gehäuseteil des absteigenden Teils 802 einen geringeren Durchmesser auf, als der aufsteigende Teil 801. In diesem ersten Ausführungsbeispiel ist der absteigende Teil 802 des Kanals 80 seitlich am Behälter 20 angeordnet.

Die Vorrichtung 40 weist eine die Vorrichtung umschließende Seitenwand 42, eine zwischen dem aufsteigenden Teil 801 und dem absteigenden Teil 802 angeordnete Trennwand 46, sowie eine Abdeckung 44 auf, welche den Übergang 803 vom aufsteigenden Teil 801 zum absteigenden Teil 802 nach oben hin begrenzt.

In einem Bereich unmittelbar anschließend an die Seitenwand 42 ist der Behälter 20 angeordnet. Zwischen der Seitenwand 42 und dem Behälter 20 ist in einem Teilbereich auch das Peltierelement 30 angeordnet. Zudem ist im Behälter 20 nahe der der Vorrichtung 40 zugewandten Seite eine Verbindungsleitung 22 ausgebildet. Die Verbindungsleitung 22 sorgt bei einer Beheizung des Peltierelements 30 durch das in ihr aufsteigende warme Fluid für eine Zirkulation des Fluids im Behälter 20.

Zur Reduzierung von Wärmeverlusten sind die Vorrichtung 40 und der Behälter 20 mit einer wärmeisolierenden Schicht 806 versehen. Diese kann aus einem Kunststoff oder auch aus natürlichen Materialien, wie beispielsweise Polyurethanschaum, Polystyrolplatten oder auch Hanfplatten bestehen.

Eine nächtliche Abkühlung des Fluids im Behälter 20 kann auch verhindert oder verringert werden, indem um den Kühlkörper 92 auf der Kaltseite 302 des Peltierelements 30 ein nicht dargestellter Reflektor angebracht wird, der die Wärmestrahlung reflektiert.

Die Verlustwärme kann zusätzlich dadurch verringert werden, dass zur Luftführung eine Umgebungsluft L40 in den aufsteigenden Teil 801 eingeführt und als eine Luft L durch den absteigenden Teil 802 wieder herausgeführt wird. In einer Auslassöffnung A und/oder in einer Einlassöffnung E des Kanals 80 sind ein Gitter 804 und/oder Rohre 805 vorgesehen. An das Gitter 804 und/oder die Rohre 805 im aufsteigenden Teil 801 des Kanals 80 schließt sich als Bestandteil der Vorrichtung 40 zum Fördern von Umgebungsluft ein Gebläse 807 an.

In diesem ersten Ausführungsbeispiel sind die Vorrichtung 40 zum Fördern von Umgebungsluft und der Behälter 20 aus zwei separaten und miteinander verbindbaren Bauteilen gebildet. Die Verbindung erfolgt vorzugsweise mittels einer kraftschlüssigen Verbindung wie beispielsweise verschrauben oder mittels einer stoffschlüssigen Verbindung wie beispielsweise verschweißen oder verkleben.

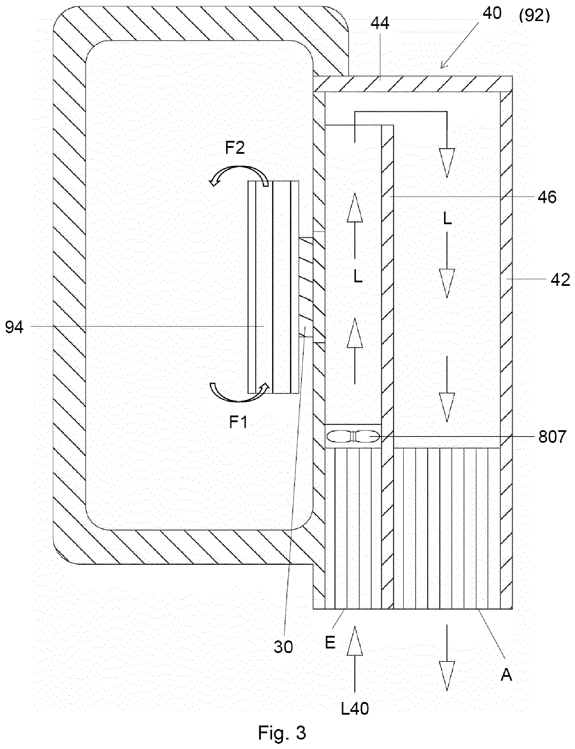

Im zweiten Ausführungsbeispiel gemäß Fig. 3 ist der aufsteigende Teil 801 des Kanals 40 am Behälter 20 angeordnet. Gitter 804 und/oder Rohre 805 sowie das Gebläse 807 sind analog Fig. 2 angeordnet. Gleiches gilt für die Seitenwände 42, die Trennwand 46 und die Abdeckung 44. Die Umgebungsluft L40 wird durch die Einlassöffnung E in den aufsteigenden Teil 801 eingeführt und verlässt als Luft L die Auslassöffnung A des absteigenden Teils 802.

Das Peltierelement 30 ist zwischen der zum Behälter 20 hin zeigenden, die Kaltseite 302 des Peltierelements 30 bildenden Seitenwand 42 der Vorrichtung 40 und einem die Heißseite 301 des Peltierelements 30 bildenden, im Behälter 20 angeordneten Wärmetauscher 94 angeordnet. Im Wärmetauscher 94 erfährt das temperierbare Fluid einen zirkulierenden Umwälzungsprozess, in dem kälteres Fluid F1 an dessen Unterseite aus dem Behälter 20 angesaugt und erwärmtes Fluid F2 an dessen Oberseite wieder an den Behälter 20 abgegeben wird.

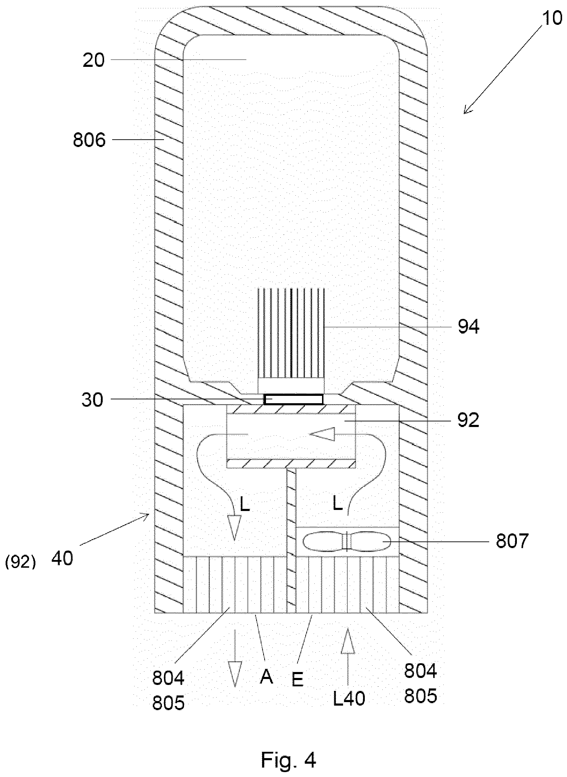

Die Fig. 4 zeigt ein drittes Ausführungsbeispiel der Vorrichtung 10, in der der Behälter 20 oberhalb der Vorrichtung 40 angeordnet ist. Die Zufuhr der Umgebungsluft L40 erfolgt ebenfalls über die Einlassöffnung E des aufsteigenden Teils 801 des Kanals 80, die mit einem Gitter 804 und/oder Rohren 805, welche als Luftkanäle ausgebildet sind, versehen ist, an die ein Gebläse 807 anschließt. Die Luft L wird durch einen vorzugsweise im rechten Winkel zu den Seitenwänden 42, der Trennwand 46 angeordneten Kühlkörper 92 geführt, welcher als durchströmte Röhre ausgebildet ist. Das Peltierelement 30 ist zwischen dem die Kaltseite 302 bildenden Kühlkörper 92 in der Vorrichtung 40 und dem die Heißseite 301 bildenden Wärmetauscher 94 im Behälter 20 angeordnet. Der Kühlkörper 92 und/oder der Wärmetauscher 94 können gemäß einer vorteilhaften Weiterbildung der Erfindung auch als sogenanntes Wärmerohr ("Heatpipe") ausgebildet sein.

Der Behälter 20 und die Vorrichtung 40 sind in diesem Ausführungsbeispiel als einstückiges Bauteil, beispielsweise als gegossener oder mittels eines Auftragverfahrens erzeugter Block ausgebildet.

In einem weiteren, nicht dargestellten Ausführungsbeispiel ist im Behälter 20 auf der der Heißseite 301 des Peltierelements 30 zugewandten Seite ein Rohr angeordnet, welches in definierten Abständen Öffnungen aufweist. Durch den im Behälter 20 herrschenden Dichteunterschied des Fluids aufgrund der unterschiedlichen Temperaturen im Behälter 20, findet eine Umwälzung des Fluids statt, die auf dem Dichteunterschied von Wasser mit verschiedener Temperatur beruht. Zusätzlich wird dann das erwärmte Wasser in einer entsprechenden Temperaturzone des Behälters 20 eingeladen (Behälter 20 mit "Schichtladung").

Der photovoltaische Solargenerator 501 lädt den in Figur 1 gezeigten Akkumulator 502 mit überschüssiger elektrischer Energie auf, die zum Betrieb des Peltierelements 30 und des Gebläses 807 bei intensiver Sonneneinstrahlung zeitweise nicht benötigt wird (Betriebsart: "Ladebetrieb des Akkumulators 502"). Der Akkumulator 502 speist dann das Peltierelement 30 in den Zeiten mit Energie, in denen Wärmeverluste im Behälter 20 verhindert werden müssen (typischerweise nachts) oder in denen der photovoltaische Solargenerator 501 allein noch nicht genügend Energie zur Erzeugung der benötigten Menge erwärmten Fluids erzeugen kann (beispielsweise bei oder vor Sonnenaufgang; Betriebsart: "Zuheizung durch Akkumulator") .

Mittels der Erfindung lässt sich ein COP ("Coefficient of performance") von durchschnittlich 2,2 erreichen, wobei bei kaltem Fluid im Behälter 20 und einer geringen elektrischen Leistung sogar Spitzenwerte eines COP von 5 bis 6 erreicht werden und dieser selbst unter ungünstigsten Bedingungen nicht unter 1,5 fällt. Die Erfindung ermöglicht somit eine sehr effiziente Umsetzung einer zugeführten elektrischen Leistung in ein Vielfaches an Wärmeenergie des zu erwärmenden Fluids.

Besonders vorteilhaft ist es, wenn eine Uhr in einem Mikrocontroller im Steuergerät 60 durch eine Messung der vom Solargenerator 501 erzeugten Energie wenigstens einen Bezugspunkt erhält. Dieser Bezugspunkt entsteht durch den Sonnenaufgang und den Sonnenuntergang, die beide zu einem signifikanten Wechsel der erzeugten elektrischen Energie am Solargenerator führen. Dabei kann der Mikrocontroller zusätzlich mit einem GPS-Empfänger und einem Speicher mit einer Datenbank über die ortsüblichen jahreszeitlichen Sonnen auf Gänge und Sonnenuntergänge verbunden sein. Durch diese Bezugspunkte wird sichergestellt, dass Abweichungen der Uhr, wie sie über einen längeren Zeitraum nahezu unvermeidbar auftreten, durch das Steuergerät 60 korrigiert werden können. Der Benutzer kann dadurch immer zu dem von ihm gewünschten Zeitpunkt die von ihm gewünschte Menge temperierten Fluids aus dem Behälter 20 entnehmen.

Der Akkumulator 502 wird bevorzugt auch für eine Glättungsfunktion verwendet, indem er Spitzenleistungen des Solargenerators 501, wie sie beispielsweise bei Wolkenlücken auftreten können, abfängt und speichert, so dass die dem Peltierelement 30 zugeführte elektrische Energie immer möglichst gleichmäßig auf einem eher niedrigen Niveau gehalten wird, bei dem der Wirkungsgrad des Gesamtsystems am höchsten ist.

Der Akkumulator 502 ist besonders bevorzugt als Hybridspeicher ausgebildet, mit einer Bleibatterie, die bevorzugt immer zunächst möglichst voll geladen wird und mit einem Lithium-Ionen-Akku, der die verbleibende, vom Solargenerator 501 erzeugte und vom Peltierelement 30 aktuell nicht benötigte Energie speichert. Der Akkumulator 502 kann jedoch auch nur von einem Lithium-Ionen-Akku gebildet sein. Durch die vorteilhafte Steuerung mittels des Steuergeräts 60 wird das Peltierelement 30 immer mit einer möglichst niedrigen Leistung beschickt, die einen hohen COP von 4 bis 5 ermöglicht, und die überschüssige elektrische Energie im Akkumulator 502 gespeichert.

Um das System unempfindlicher gegen Teilabschattung zu machen, werden im Solargenerator 501 zusätzliche Bypassdioden eingebaut. Es wird bevorzugt parallel zu jeweils zwölf Solarzellen oder einer noch geringeren Zahl von Solarzellen jeweils eine Bypassdiode eingebaut.

Ein Zusatznutzen der Erfindung besteht darin, die Wärmesenke, die an der Kaltseite 302 des Peltierelements 30 entsteht, zu nutzen, um einen Raum zu kühlen. Der Raumluft kann durch einen geeigneten Luftstrom oder über einen geeigneten Flüssigkeitskreislauf die Wärme entzogen werden.

Es wäre auch möglich die Solarzellen des Solargenerators 501 selbst zu kühlen und dadurch eine höhere Stromproduktion zu ermöglichen.

Aus Gründen der Effizienz wurden bislang Solarzellen nur sehr selten zur Warmwassererzeugung verwendet. Durch die beschriebene Vorrichtung kann die Wärmeleistung gegenüber der reinen elektrischen Solarzellenleistung erheblich gesteigert werden. Durch das Peltierelement 30 und den Kühlkörper 92 wird der Umgebung Wärme entzogen, die dem Behälter 20 zusammen mit der elektrischen Versorgungsenergie für das Peltierelement 30 zugeführt wird. Dadurch wird dem Behälter 20 insgesamt eine Energiemenge zugeführt, die deutlich über der Energiemenge liegt, die nur durch die elektrische Energie zugeführt würde.

Gegenüber solarthermischen Wasserheizern besteht der Vorteil, dass die Energie, die zum als Warmwassertank fungierenden Behälter 20 geleitet wird, in einfach zu verlegenden Kabeln in Form von elektrischer Energie und nicht mit Hilfe von Rohren in Form von warmem Wasser transportiert wird. Durch den Energietransport über elektrische Energie kann der Behälter 20 auch relativ weit entfernt und unabhängig von der Höhenlage des Solargenerators 501 aufgestellt werden. Wird der Behälter 20 tiefer als der Solargenerator 501 angeordnet, benötigt man nicht - wie bei solarthermischen Wasserheizern üblich - eine Pumpe für den Energietransport.

Wird das Wasser außerhalb des Behälters 20 zusätzlich durch eine Wärmequelle erwärmt und über Rohrleitungen oder Schläuche dem Behälter 20 zugeführt, kann dieser Kreislauf während der Nachtzeit durch eine beispielsweise als Abwehrventil ausgebildete Einrichtung unterbrochen werden und somit die Wärmeverluste im Behälter 20 verringert werden.

Ein weiterer Vorteil besteht darin, dass ein photovoltaischer Wasserheizer auch bei geringen Umgebungstemperaturen und geringer Einstrahlungsleistung warmes Wasser erzeugt.

### Bezugszeichenliste

- 10: Vorrichtung
- 20: Behälter
- 201: Wand
- 202: Verbindungsleitung
- 30: Peltierelement
- 301: Heißseite
- 302: Kaltseite
- 40: Vorrichtung (zum Fördern von Umgebungsluft)
- 42: Seitenwand (von (40)
- 44: Abdeckung (von 40)
- 46: Trennwand (von 40)
- 50: Energiequelle
- 501: Solargenerator
- 502: Akkumulator
- 60: Steuergerät
- 62: Fernsteuerung
- 70: DC/DC-Wandler
- 80: Kanal (von 40)
- 801: aufsteigender Teil (von 80)
- 802: absteigender Teil (von 80)
- 803: Übergang (zwischen 801 und 802)
- 804: Gitter
- 805: Rohr
- 806: Schicht (an 20 und 80)
- 807: Gebläse
- 92: Kühlkörper
- 94: Wärmetauscher
- A: Auslassöffnung
- E: Einlassöffnung
- F1: Fluid
- F2: Fluid
- L: Luft
- L40: Umgebungsluft

## Patentansprüche

1. Vorrichtung (10) zur Speicherung von temperierbaren Fluiden mit wenigstens einem Behälter (20), mit einem Peltierelement (30), dessen Heißseite (301) in Kontakt mit wenigstens einer Wand (201) des Behälters (20) steht, mit wenigstens einer Vorrichtung (40) zum Fördern von Umgebungsluft (L40) zur Kaltseite (302) des Peltierelements (30) und mit wenigstens einer elektrischen Energiequelle (50) zur Versorgung des Peltierelements (30) und der Vorrichtung (40) zum Fördern von Umgebungsluft wobei zur verlustarmen Speicherung des Fluids im Behälter (20) die Vorrichtung (40) zum Fördern von Umgebungsluft (L40) in Abhängigkeit von der Temperatur der Umgebungsluft (L40) betreibbar ist, wobei die Kaltseite (302) des Peltierelements (30) in einem vertikal angeordneten Kanal (80) der Vorrichtung (40) zum Fördern der Umgebungsluft (L40) angeordnet oder einen Teil einer Wand dieses Kanals (80) bildet, **dadurch gekennzeichnet dass** dieser Kanal (80) wenigstens einen aufsteigenden Teil (801) und einen absteigenden Teil (802) aufweist sowie einen Übergang (803) vom aufsteigenden Teil (801) zum absteigenden Teil (802), der nach oben hin abgeschlossen ist und die Heizleistung des Peltierelements (30) in Abhängigkeit von der aktuell erzeugten elektrischen Energie eines die elektrische Energiequelle (50) bildenden photovoltaischen Solargenerators (501) steuerbar ist.

2. Vorrichtung (10) nach Anspruch 1 **dadurch gekennzeichnet, dass** eine weitere elektrische Energiequelle (50) von einem Akkumulator (502) gebildet ist.

3. Vorrichtung (10) nach Anspruch 2 **dadurch gekennzeichnet, dass** der Ackumulator (502) von dem photovoltaischen Solargenerator (501) aufladbar ist.

4. Vorrichtung (10) nach einem der vorhergehenden Ansprüche, **dadurch gekennzeichnet, dass** der photovoltaische Solargenerator (501) mit einem die Solargenerator-Spannung regelnden DC/DC-Wandler (70) verbunden ist.

5. Vorrichtung (10) nach Anspruch 4 **dadurch gekennzeichnet, dass** der Solargenerator (501) mit einem auf konstante Solargenerator-Spannung oder auf maximale Solargenerator-Leistung geregelten DC/DC-Wandler (70) auf das Peltierelement (30) angepasst ist.

6. Vorrichtung (10) nach einem der vorhergehenden Ansprüche **dadurch gekennzeichnet, dass** der Wärmeverlust des Fluids im Behälter (20) durch Versorgen mit einer geringen elektrischen Energiemenge oder durch Beschickung des Peltierelements (30) mit einer geringen elektrischen Leistung kompensierbar ist.

7. Vorrichtung (10) nach einem der vorhergehenden Ansprüche, **dadurch gekennzeichnet, dass** der Kanal (80) zumindest abschnittsweise wenigstens ein Gitter (804) und/oder mehrere Rohre (805) aufweist.

8. Vorrichtung (10) nach wenigstens einem der vorhergehenden Ansprüche, **dadurch gekennzeichnet, dass** wenigstens eine Wand des Behälters (20) und/oder der Kanal (80) mit einer wärmeisolierenden Schicht (806) versehen ist.

9. Vorrichtung (10) nach wenigstens einem der vorhergehenden Ansprüche **dadurch gekennzeichnet, dass** der Behälter (20) in räumlich getrennter Position zur wenigstens einen elektrischen Energiequelle (50; 501, 502) anordenbar ist.

10. Vorrichtung (10) nach einem der vorhergehenden Ansprüche, **dadurch gekennzeichnet, dass** die Kaltseite des Peltierelements (30) alternativ oder zusätzlich zur Umgebungsluft (L40) mittels eines weiteren Fluids erwärmbar ist.

11. Vorrichtung (10) nach einem der vorhergehenden Ansprüche **dadurch gekennzeichnet, dass** der Zeitpunkt und/oder die Zeitdauer und/oder die vom Peltierelement (30) an das Fluid abgegebene Wärmeenergie von einem Steuergerät (60) anhand eines im Steuergeräts (60) gespeicherten wenigstens einen Anforderungsprofils zur Bereitstellung des temperierbaren Fluids steuerbar ist, wobei das wenigstens eine Anforderungsprofil durch eine Programmierung einer Benutzers in das Steuergerät (60) eingebbar ist oder durch von Sensoren ermittelte Werte, die die Entnahmen aus dem Behälter (20) nach Zeit und/oder Menge und/oder Temperatur messen, mittels eines im Steuergerät gespeicherten Algorithmus berechenbar ist.

12. Vorrichtung (10) nach Anspruch 11, **dadurch gekennzeichnet, dass** das Steuergerät (60) über eine Fernsteuerung (62) ansteuerbar und/oder programmierbar ist.

13. Vorrichtung (10) nach Anspruch 12 **dadurch gekennzeichnet, dass** die Fernsteuerung (62) über eine Mobilfunk-Applikation erfolgen kann.

14. Vorrichtung (10) nach einem der Ansprüche 11 bis 13 und nach Anspruch 3, **dadurch gekennzeichnet, dass** mittels des Steuergeräts (60) das Peltierelement (30) immer mit einer möglichst niedrigen Leistung beschickt wird, die einen hohen COP ("Coefficient of performance") von 4 bis 5 ermöglicht, und die überschüssige elektrische Energie im Akkumulator (502) gespeichert wird.

## Claims

1. Device (10) for storing temperature-controlled fluids with at least one container (20), having a Peltier element (30) whose hot side (301) is in contact with at least one wall (201) of the container (20), having at least one device (40) for delivering ambient air (L40) to the cold side (302) of the Peltier element (30) and having at least one electric power source (50) for supplying the Peltier element (30) and the device (40) with ambient air (L40), **characterized in that** for the low-loss storage of the fluid in the container (20), the device (40) for delivering ambient air (L40) is operable as a function of the temperature of the ambient air (L40), wherein the cold side (302) of the Peltier element (30) is arranged in a vertically disposed channel (80) for guiding the ambient air (L40) or forms part of a wall of this channel (80), wherein said channel (80) comprises at least one ascending part (801) and one descending part (802) and a transition (803) from the ascending part (801) to the descending part (802), which is closed at the top and the heating power of the Peltier element (30), can be controlled as a function of the currently generated electrical energy of a photovoltaic generator (501) forming the electric energy source (50).

2. Device (10) according to claim 1, **characterized in that** a further electrical energy source (50) is formed by an accumulator (502).

3. Device (10) according to claim 2, **characterized in that** the accumulator (502) of the photovoltaic solar generator (501) is chargeable.

4. Device (10) according to one of the preceding claims, **characterized in that** the photovoltaic solar generator (501) is connected to a DC/DC converter regulating the solar generator voltage (70).

5. Device (10) according to claim 4, **characterized in that** the solar generator (501) with a DC/DC converter regulated to constant solar generator voltage or maximum solar generator power (70) is adapted to the Peltier element (30).

6. Device (10) according to any one of the preceding claims, **characterized in that** the heat loss of the fluid in the container (20) can be compensated by supplying a small amount of electrical energy or by charging the Peltier element (30) with a low electric power.

7. Device (10) according to any one of the preceding claims, **characterized in that** the channel (80) comprises, at least in sections, at least one grid (804) and/or a plurality of pipes (805).

8. Device (10) according to at least one of the preceding claims, **characterized in that** at least one wall of the container (20) and/or the channel (80) is provided with a heat-insulating layer (806).

9. Device (10) according to at least one of the preceding claims, **characterized in that** the container (20) can be arranged in a spatially separate position from at least one electrical energy source (50; 501, 502).

10. Device (10) according to one of the preceding claims, **characterized in that** the cold side of the Peltier element (30) can be heated alternatively or additionally to the ambient air (L40) by means of a further fluid.

11. Device (10) according to one of the preceding claims, **characterized in that** the time and/or the time duration and/or the heat energy emitted to the fluid by the Peltier element (30) is controlled by a control appliance (60) based on at least one requirement profile for providing the temperature-controlled fluid stored in the control appliance (60), wherein the at least one requirement profile can be entered in the control appliance (60) by programming by a user or can be calculated by means of an algorithm stored in the control appliance with values determined by sensors, which measure the withdrawals from the container (20) by time and/or amount and/or measure temperature.

12. Device (10) according to claim 11, **characterized in that** the control appliance (60) is controlled and/or programmable via a remote control (62).

13. Device (10) according to claim 12, **characterized in that** the remote control (62) can take place via a mobile phone application.

14. Device (10) according to any one of claims 11 to 13, **characterized in that,** by means of the control appliance (60), the Peltier element (30) is always charged with a low power which allows a high COP ("coefficient of performance") of 4 to 5, and the excess electrical energy is stored in the accumulator (502).

## Revendications

1. Dispositif (10) de stockage de fluides régulables en température, comprenant au moins un récipient (20), un élément à effet Peltier (30) dont le côté chaud (301) est en contact avec au moins une paroi (201) du récipient (20), au moins un dispositif (40) destiné à acheminer de l'air ambiant (L40) vers le côté froid (302) de l'élément à effet Peltier (30) et au moins une source d'énergie électrique (50) destinée à alimenter l'élément à effet Peltier (30) et le dispositif (40) destiné à acheminer de l'air ambiant, dans lequel, pour stocker à faible perte le fluide dans le récipient (20), le dispositif (40) peut être utilisé pour acheminer de l'air ambiant (L40) en fonction de la température de l'air ambiant (L40), dans lequel le côté froid (302) de l'élément à effet Peltier (30) est disposé dans un conduit (80) disposé verticalement du dispositif (40) destiné à acheminer de l'air ambiant (L40) ou fait partie d'une paroi de ce conduit (80), **caractérisé en ce que** ce conduit (80) comporte au moins une partie montante (801) et une partie descendante (802) ainsi qu'une transition (803) de la partie ascendante (801) à la partie descendante (802), laquelle est fermée en haut, et **en ce que** la puissance de chauffage de l'élément à effet Peltier (30) peut être commandée en fonction de la puissance électrique réellement générée d'un générateur solaire photovoltaïque (501) formant une source d'énergie électrique (50).

2. Dispositif (10) selon la revendication 1, **caractérisé en ce qu'**une autre source d'énergie électrique (50) est formée par un accumulateur (502).

3. Dispositif (10) selon la revendication 2, **caractérisé en ce que** l'accumulateur (502) peut être rechargé par le générateur solaire photovoltaïque (501).

4. Dispositif (10) selon l'une des revendications précédentes, **caractérisé en ce que** le générateur solaire photovoltaïque (501) est connecté à un convertisseur CC/CC (70) régulant la tension du générateur solaire.

5. Dispositif (10) selon la revendication 4, **caractérisé en ce que** le générateur solaire (501) est adapté à l'élément à effet Peltier (30) à l'aide d'un convertisseur CC/CC (70) régulé en tension constante du générateur solaire ou en puissance maximale du générateur solaire.

6. Dispositif (10) selon l'une des revendications précédentes, **caractérisé en ce que** la perte de chaleur du fluide dans le récipient (20) peut être compensée par la fourniture d'une petite quantité d'énergie électrique ou par le chargement de l'élément à effet Peltier (30) avec une faible puissance électrique.

7. Dispositif (10) selon l'une des revendications précédentes, **caractérisé en ce que** le conduit (80) comporte au moins par sections au moins une grille (804) et/ou plusieurs tuyaux (805).

8. Dispositif (10) selon au moins l'une des revendications précédentes, **caractérisé en ce qu'**au moins une paroi du récipient (20) et/ou du conduit (80) est pourvue d'une couche d'isolation thermique (806).

9. Dispositif (10) selon au moins l'une des revendications précédentes, **caractérisé en ce que** le récipient (20) peut être disposé dans une position spatialement séparée de l'au moins une source d'énergie électrique (50 ; 501, 502).

10. Dispositif (10) selon l'une des revendications précédentes, **caractérisé en ce que** le côté froid de l'élément à effet Peltier (30) peut être chauffé alternativement ou en plus de l'air ambiant (L40) au moyen d'un autre fluide.

11. Dispositif (10) selon l'une des revendications précédentes, **caractérisé en ce que** l'instant et/ou la durée et/ou l'énergie thermique transférée de l'élément à effet Peltier (30) au fluide peuvent être commandés par une unité de commande (60) sur la base d'au moins un profil d'exigences mémorisé dans l'unité de commande (60) pour la fourniture du fluide régulable en température, dans lequel l'au moins un profil d'exigences peut être entré dans l'unité de commande (60) par la programmation réalisée par un utilisateur, ou peut être calculé, au moyen d'un algorithme mémorisé dans l'unité de commande, par des valeurs déterminées par des capteurs qui mesurent les prélèvements du récipient (20) en fonction du temps et/ou de la quantité et/ou de la température.

12. Dispositif (10) selon la revendication 11, **caractérisé en ce que** l'unité de commande (60) peut être commandée et/ou programmée par l'intermédiaire d'une commande à distance (62).

13. Dispositif (10) selon la revendication 12, **caractérisé en ce que** la commande à distance (62) peut être effectuée par l'intermédiaire d'une application de communication mobile.

14. Dispositif (10) selon l'une des revendications 11 à 13 et selon la revendication 3, **caractérisé en ce que,** au moyen de l'unité de commande (60), l'élément à effet Peltier (30) est systématiquement chargé avec une puissance aussi faible que possible, laquelle puissance permet un COP (« coefficient de performance ») élevé de 4 à 5, et **en ce que** l'énergie électrique excédentaire est stockée dans l'accumulateur (502).
